# EUROPÄISCHE PATENTSCHRIFT

(11) **EP 0 728 164 B1**
(45) Veröffentlichungstag und Bekanntmachung des Hinweises auf die Patenterteilung: **17.04.2002**
(21) Anmeldenummer: 94929526.5
(22) Anmeldetag: 10.10.1994
(51) Int. Cl.: C09D 183/06, C09D 183/14

(54) **VERFAHREN ZUR HERSTELLUNG VON ZUSAMMENSETZUNGEN AUF DER BASIS VON EPOXIDGRUPPEN-HALTIGEN SILANEN**
PROCESS FOR THE PRODUCTION OF COMPOUNDS BASED ON SILANES CONTAINING EPOXY GROUPS
PROCEDE DE PREPARATION DE COMPOSITIONS A BASE DE SILANES CONTENANT DES GROUPES EPOXY

(30) Priorität: 10.11.1993 DE 4338361
(43) Veröffentlichungstag der Anmeldung: 28.08.1996
(73) Patentinhaber: INSTITUT FÜR NEUE MATERIALIEN gemeinnützige GmbH, 66123 Saarbrücken (DE)
(72) Erfinder: KASEMANN, Reiner, D-66578 Schiffweiler (DE); SCHMIDT, Helmut, D-66130 Saarbrücken (DE); ARPAC, Ertugrul, 07200 Antalya (TR); GERHARD, Volker, D-66125 Saarbrücken (DE); GEITER, Elisabeth, D-66117 Saarbrücken (DE); WAGNER, Georg, D-66557 Illingen-Hüttigweiler (DE)
(74) Vertreter: Barz, Peter, Dr.
(86) Internationale Anmeldenummer: EP9403336
(87) Internationale Veröffentlichungsnummer: WO9513326

(56) Entgegenhaltungen:
- EP-A- 0 526 975
- WO-A-94/20581
- DE-A- 4 020 316
- FR-A- 2 423 521
- FR-A- 2 663 036
- GB-A- 2 051 843
- GB-A- 2 137 648
- US-A- 5 134 191

## Beschreibung

Die vorliegende Erfindung betrifft ein Verfahren zur Herstellung von Zusammensetzungen auf der Basis von hydrolysierbaren Silanen mit Epoxidgruppen, die dadurch erhältlichen Zusammensetzungen und deren Verwendung. Insbesondere betrifft die vorliegende Erfindung ein Verfahren zur Herstellung von derartigen Zusammensetzungen für Beschichtungen und Formkörper mit variablen Eigenschaften.

Der Stand der Technik zeigt, daß es über den Sol-Gel-Prozeß gelingt, aus Alkoxiden, wie z.B. Aluminiumpropylat oder -butylat, unter Einbeziehung von modifizierten Alkoxysilanen Materialien herzustellen, die sich für Beschichtungszwecke eignen. Diese Verfahren sind im wesentlichen dadurch gekennzeichnet, daß eine Mischung der Ausgangskomponenten über einen Hydrolyse- und Kondensationsprozeß zu einer viskosen flüssigen Phase reagieren kann. Bei diesen Synthesemethoden entsteht ein organisch modifiziertes anorganisches Grundgerüst, das sich im Vergleich zu üblichen Polymeren durch eine erhöhte Oberflächenhärte auszeichnet (Ritzhärten mit dem Vickers-Diamant von 4 bis 5 im Vergleich zu Ritzhärten von üblichen Polymeren in der Größenordnung von 1). Ein entscheidender Nachteil dieses Prozesses ist jedoch, daß aufgrund der hohen Reaktivität der aluminiumhaltigen Komponente keine stabilen Zwischenphasen ("living system") erzielbar sind. Damit ist die sogenannte Topfzeit begrenzt (je nach Anwendungszweck zwischen einigen Stunden und mehreren Tagen). Die längeren Topfzeiten sind nicht eine Folge der Systemstabilität, sondern lediglich anwendungsbedingt zu verstehen. Dies bedeutet, daß für verschiedene Anwendungen im Beschichtungsbereich eine relativ große Bandbreite der sich verändernden Materialeigenschaft (Viskosität) toleriert werden kann. Wie schon erwähnt, weisen diese Schichten im Vergleich zu organischen Polymeren eine relativ große Härte auf, sind jedoch im Vergleich zu anorganischen Materialien immer noch relativ weich. Dies rührt daher, daß die anorganischen Anteile im System zwar stark vernetzend wirken, daß aber aufgrund ihrer sehr geringen Größe (in molekularen Dimensionen, d.h. < 1 nm) die mechanischen Eigenschaften, wie z.B. Härte und Abriebbeständigkeit, nicht zum Tragen kommen. Die letztgenannten Eigenschaften kommen bei sogenannten gefüllten Polymeren voll zur Geltung, da hierbei Partikelgrößen von mehreren µm vorliegen. Allerdings geht dabei die Transparenz entsprechender Materialien verloren und Anwendungen im Bereich der Optik sind nicht mehr möglich. Die Verwendung von kleinen Teilchen aus SiO₂ (z.B. Aerosile^{**(R)**}, DEGUSSA), zur Herstellung transparenter Schichten mit erhöhter Abriebfestigkeit ist zwar gelungen, aber bei den einsetzbaren geringen Konzentrationen sind die erreichten Abriebfestigkeiten ähnlich denen des oben genannten Systems. Die Obergrenze der Füllstoffmenge wird durch die hohe Oberflächenreaktivität der kleinen Teilchen bestimmt, die Agglomerationen bzw. intolerable Viskositätserhöhungen zur Folge hat.

Somit ist die erste Aufgabe der vorliegenden Erfindung die Bereitstellung eines organisch modifizierten anorganischen Systems, das in seiner Härte deutlich über dem der im Stand der Technik beschriebenen Materialien liegt und das über eine hohe optische Transparenz verfügt. Darüber hinaus sollte das System auch die Herstellung stabiler, beschichtungsfähiger Zwischenprodukte mit über die Zeit konstanten Eigenschaften und die Einstellung variabler oberflächenphysikalischer und oberflächenchemischer Eigenschaften ermöglichen, wie z.B. Hydrophilie oder Hydrophobie in Kombination mit Oleophobie.

Zum Korrosionsschutz von Metalloberflächen werden in der Regel Systeme verwendet, die Passivierungsschichten entwickeln und dadurch gekennzeichnet sind, daß sie eine sehr feste Verbindung mit der Oberfläche eingehen, z.B. Bildung von gemischten Estern oder Oxiden (Pb₃O₄ auf Eisenoberflächen, Cr₂O₃ auf Aluminiumoberflächen usw.). Mit diesen Oberflächenverbindungen wird verhindert, daß Wasser in Verbindung mit Sauerstoff mit dem Substratmaterial eine Reaktion eingehen kann, die zu einer permanenten Oxidation der Oberflächenschicht des Substrats (Metalls) führt. Die Schutzoxidschichten (Passivierungsschichten) haben in der Regel weiterhin die Eigenschaft, daß sie selbst durch Feuchte nicht weiter reagieren, sondern passivierte Oberflächen bilden (basische Carbonate, Hydroxide, Oxide). Aus diesem Grund gelingt es nicht, Metalle wie Eisen oder Aluminium ohne eine vorhergehende Passivierung durch die bloße Beschichtung mit organischen Polymerlacken vor Korrosion zu schützen. Rein organische Lacke haben die Eigenschaft, daß sie gegenüber Feuchte und Sauerstoff durchlässig sind und damit keinen Schutz gegen den Angriff von Feuchte und Sauerstoff auf die Metalloberflächen bieten.

Die eingangs erwähnten organisch modifizierten anorganischen Beschichtungsmaterialien weisen im Prinzip die gleichen Nachteile auf, da sie bedingt durch die Anwesenheit von organischen Gruppen ebenfalls die Diffusion von Wasser bzw. Feuchtigkeit und Sauerstoff durch die entsprechenden Schichten erlauben. Zwar kann durch ganz bestimmte Verfahrensmaßnahmen ein verbesserter Korrosionsschutz erzielt werden, doch sind entsprechende Materialien sehr spröde und neigen zur Mikrorißbildung (besonders bei Wechsellast-Biegebeanspruchung). Durch diese Mikrorißbildung kann die Oberfläche geschädigt werden und es kann Korrosion einsetzen.

Somit ist eine zweite Aufgabe der vorliegenden Erfindung die Bereitstellung eines organisch modifizierten anorganischen Systems, das sich zum Korrosionsschutz von Metalloberflächen eignet, ohne gleichzeitig die bisherigen Nachteile entsprechender Systeme, wie z.B. Sprödigkeit, Mikrorißbildung und schlechte Haftung auf dem Substrat (Metall) zu zeigen.

US-A-5134191 beschreibt eine Beschichtungsmasse, die ein Epoxy-funktionelles Silan und Sole der Oxide von Si, Sb, Al, Ti und deren Gemischen mit Teilchengrößen von 5 bis 100 nm enthält.

Die oben genannten Aufgaben werden allgemein gelöst durch ein Verfahren zur Herstellung von Zusammensetzungen auf der Basis von hydrolysierbaren Silanen mit Epoxidgruppen, welches umfaßt die Stufe der Vereinigung von
(a) Böhmit-Teilchen mit einer Teilchengröße im Bereich von 1 bis 100 nm (Material B) und
(b) einer aus Aluminiumtributoxyethanolat und Alkoholaten von Ti und Zr ausgewählten Verbindung
mit mindestens einer vorhydrolysierten oder in Gegenwart der Teilchen (a) hydrolysierten Siliciumverbindung A mit mindestens einem hydrolytisch nicht abspaltbaren, direkt an Si gebundenen Rest, der über einen Epoxidring verfügt.

Dem oben erwähnten Grundtyp von Zusammensetzungen können jeweils noch eine oder beide der folgenden Komponenten zugesetzt werden, nämlich ii) ein vorzugsweise nicht ionisches Tensid C; und/oder iii) ein aromatisches Polyol D mit einem durchschnittlichen Molekulargewicht von nicht mehr als 1000, lediglich mit der Ausnahme, daß die Zusammensetzung für korrosionsinhibierende Beschichtungen kein Tensid C enthalten sollte.

Somit können z.B. in der Zusammensetzung für hydrophile Beschichtungen und Formkörper zusätzlich das teilchenförmige Material B und/oder das aromatische Polyol D einverleibt werden, um den entsprechenden Beschichtungen und Formkörpern eine noch bessere Kratzfestigkeit (Böhmit-Teilchen) oder zusätzlich eine verbesserte Kondenswasserbeständigkeit (Polyol D) zu verleihen.

Insbesondere führt die Kombination der Böhmit-Teilchen mit der hydrolysierten Siliciumverbindung A zu einer Zusammensetzung für hochkratzfeste Beschichtungen und Formkörper. Wird eine Zusammensetzung für (Langzeit-)hydrophile Beschichtungen und Formkörper gewünscht, wird die vorhydrolysierte Siliciumverbindung A vorzugsweise mit einem kationischen, anionischen oder nicht-ionischen Tensid, besonders bevorzugt einem nicht-ionischen Tensid, kombiniert.

Schließlich führt die Kombination aus vorhydrolysierter Siliciumverbindung A und aromatischem Polyol D zu einer Zusammensetzung für korrosionsinhibierende Beschichtungen.

Weiter kann den Zusammensetzungen für hochkratzfreste und korrosionsinhibierende Beschichtungen zusätzlich eine hydrolysierbare Siliciumverbindung mit mindestens einem nicht hydrolysierbaren Rest, der 5 bis 30 Fluoratome an Kohlenstoffatome gebunden aufweist, die durch mindestens zwei Atome von Si getrennt sind, einverleibt werden. Die Verwendung eines derartigen fluorierten Silans führt dazu, daß dem entsprechenden Überzug zusätzlich hydrophobe und oleophobe (schmutzabweisende) Eigenschaften verliehen werden.

Erfindungsgemäß wird ein Alkoholat F von Ti, Zr oder Aluminiumtributoxyethanolat als Katalysator für die Epoxid-Epoxid- bzw. Polyol-Epoxy-Vernetzung eingesetzt. Bei Verwendung einer derartigen Komponente kann im Falle der Zusammensetzungen für (Langzeit-)hydrophile Beschichtungen und Formkörper sogar auf die Verwendung eines (nicht-ionischen) Tensids C verzichtet werden, was jedoch zur Folge hat, daß den entsprechenden Beschichtungen und Formkörpern dann keine ausgezeichneten Antibeschlageigenschaften verliehen werden. Gegebenenfalls können als Katalysatoren zusätzlich eine Lewis-Base E oder weitere Alkoholate F (siehe nachstehend) zugegeben werden.

Im Falle der Zusammensetzungen für hydrophile Beschichtungen und Formkörper kann das Tensid nicht nur in der Reaktionsmischung eingesetzt, sondern auch nachträglich thermisch in die entsprechende Beschichtung eindiffundiert werden. Erwähnt werden sollte in diesem Zusammenhang noch, daß die Verwendung von nicht-fluorierten bzw. nicht-perfluorierten Tensiden bevorzugt wird.

Schließlich gilt für alle obigen Zusammensetzungen, daß die Siliciumverbindung A nicht notwendigerweise alleine eingesetzt wird, sondern daß darüber hinaus eine oder mehrere andere hydrolysierbare Verbindungen H von ein anorganisches Netzwerk aufbauenden Elementen, insbesondere aus der Gruppe Si, Ti, Zr, Al, B, Sn und V, zusammen mit der Verbindung A hydrolysiert werden können.

Im folgenden werden die oben erwähnten Spezies A bis H näher erläutert.

### Siliciumverbindung A

Bei der Siliciumverbindung A handelt es sich um eine Siliciumverbindung, die über 2 oder 3, vorzugsweise 3, hydrolysierbare Reste und einen oder 2, vorzugsweise einen, nicht-hydrolysierbaren Rest verfügt. Der einzige bzw. mindestens einer der beiden nicht-hydrolysierbaren Reste verfügt über einen Epoxidring.

Beispiele für die hydrolysierbaren Reste sind Halogen (F, Cl, Br und I, insbesondere Cl und Br), Alkoxy (insbesondere C_{**1-4**}-Alkoxy, wie z.B. Methoxy, Ethoxy, n-Propoxy, i-Propoxy und Butoxy), Aryloxy (insbesondere C_{**6-10**}-Aryloxy, z.B. Phenoxy), Acyloxy (insbesondere C_{**1-4**}-Acyloxy, wie z.B. Acetoxy und Propionyloxy) und Alkylcarbonyl (z.B. Acetyl). Besonders bevorzugte hydrölysierbare Reste sind Alkoxygruppen, insbesondere Methoxy und Ethoxy.

Beispiele für nicht-hydrolysierbare Reste ohne Epoxidring sind Alkyl, insbesondere C_{**1-4**}-Alkyl (wie z.B. Methyl, Ethyl, Propyl und Butyl), Alkenyl (insbesondere C_{**2-4**}-Alkenyl, wie z.B. Vinyl, 1-Propenyl, 2-Propenyl und Butenyl), Alkinyl (insbesondere C_{**2-4**}-Alkinyl, wie z.B. Acetylenyl und Propargyl) und Aryl, insbesondere C_{**6-10**}-Aryl, wie z.B. Phenyl und Naphthyl), wobei die soeben genannten Gruppen gegebenenfalls einen oder mehrere Substituenten, wie z.B. Halogen und Alkoxy, aufweisen können. Auch Methacryl- und Methacryloxypropylreste verdienen in diesem Zusammenhang Erwähnung.

Beispiele für nicht-hydrolysierbare Reste mit Epoxidring sind insbesondere solche, die über eine Glycidyl- bzw. Glycidyloxygruppe verfügen.

Konkrete Beispiele für erfindungsgemäß einsetzbare Siliciumverbindungen A können z.B. den Seiten 8 und 9 der EP-A-195493 entnommen werden.

Erfindungsgemäß besonders bevorzugte Siliciumverbindungen A sind diejenigen der allgemeinen Formel (I):

R₃SiR' (I)

in welcher die Reste R, gleich oder verschieden voneinander (vorzugsweise identisch), für eine hydrolysierbare Gruppe (vorzugsweise C_{**1-4**}-Alkoxy und insbesondere Methoxy und Ethoxy) stehen und R' einen Glycidyloxy- (C_{**1-6**})-alkylen-Rest darstellt.

Wegen ihrer leichten Zugänglichkeit wird γ-Glycidyloxypropyltrimethoxysilan (im folgenden als GPTS abgekürzt) erfindungsgemäß besonders bevorzugt eingesetzt.

Die Siliciumverbindung A bzw. die Siliciumverbindungen A wird bzw. werden vorzugsweise unter Verwendung eines Katalysators hydrolysiert. Bei diesem Katalysator sollte es sich um einen sauren Katalysator handeln, da basische Katalysatoren gleichzeitig Kondensationskatalysatoren sind. Ein bevorzugter saurer Katalysator ist wäßrige HCl. Dabei wird die Hydrolyse vorzugsweise so durchgeführt, daß pro Mol hydrolysierbarem Rest ½ Mol H₂O verwendet wird.

### Böhmit-Teilchen

Die Böhmit-Teilchen weisen eine Teilchengröße im Bereich von 1 bis 100, vorzugsweise 2 bis 50 nm und besonders bevorzugt 5 bis 20 nm auf. Dieses Material kann in Form eines Pulvers eingesetzt werden, wird jedoch vorzugsweise in Form eines (insbesondere sauer stabilisierten) Sols verwendet. Besonders bevorzugt werden nanoskalige Böhmit-Teilchen. Die teilchenförmigen Materialien sind in Form von Pulvern im Handel erhältlich und die Herstellung von (sauer stabilisierten) Solen daraus ist ebenfalls im Stand der Technik bekannt. Außerdem kann hierzu auf die unten angegebenen Herstellungsbeispiele verwiesen werden.

Böhmit kann, insbesondere wenn auf hochkratzfeste Eigenschaften Wert gelegt wird, in einer Menge von bis zu 50 Gew.-%, bezogen auf den Matrix-Feststoffgehalt, eingesetzt werden. Allgemein liegt der Gehalt an Böhmit im Bereich von 1 bis 50, vorzugsweise 3 bis 40 und besonders bevorzugt 5 bis 30 Gew.-%, bezogen auf den Matrix-Feststoffgehalt.

### Tensid C

Das Tensid C, das vorzugsweise in den obigen Zusammensetzungen für die Herstellung von Langzeit-hydrophilen Beschichtungen und Formkörpern eingesetzt wird, weil es zu einem Langzeit-Antibeschlageffekt (und im Vergleich zur alleinigen Verwendung einer Lewis-Base auch zu einer höheren Hydrophilie des entsprechenden Materials) führt, ist vorzugsweise ein nicht-ionisches (nicht-perfluoriertes) Tensid.

Besonders bevorzugt sind nicht-ionische Tenside, die bei Raumtemperatur in flüssiger Form vorliegen. Wie bereits oben erwähnt, ist neben der Möglichkeit, diese Tenside während der Herstellung der Zusammensetzung zuzusetzen, auch die Möglichkeit gegeben, sie vorzugsweise in wäßriger Lösung bei ca. 50-80°C nachträglich thermisch einzudiffundieren. Bevorzugte nicht-ionische Tenside sind Polyoxyethylenoleylether unterschiedlicher Kettenlänge (z.B. Brij^{**R**} 92, Brij^{**R**} 96, Brij^{**R**} 98 der Fa. ICI), Polyoxyethylencetylether unterschiedlicher Kettenlänge (z.B. Malipal^{**R**} 24/30 bis 24/100 der Fa. Hüls und Disponil^{**R**} 05 der Fa. Henkel), Natriumlaurylsulfat (z.B. Sulfopon^{**R**} 101 Spezial der Fa. Henkel), Laurylpyridiniumchlorid (z.B. Dehydquad C Christ^{**R**} der Fa. Henkel) und Polyoxyethylensorbitanmonooleat (z.B. Tween^{**R**} 80 der Fa. Riedl de Haen) und Mischungen derselben. Besonders bevorzugt werden Polyoxyethylenoleylcetylether und Polyoxyethylenoleylether.

In den obigen Zusammensetzungen für Langzeit-hydrophile Beschichtungen und Formkörper wird das Tensid im allgemeinen in einer Menge von 0,1 bis 35 Gew.-%, bezogen auf den Feststoffgehalt der Zusammensetzung, eingesetzt. Bevorzugte Mengenbereiche sind 1 bis 20 und insbesondere 2 bis 10 Gew.-%.

### Aromatisches Polyol D

Das gegebenenfalls eingesetzte aromatische Polyol D weist ein durchschnittliches Molekulargewicht von höchstens 1000 auf. Beispiele für derartige aromatische Polyole sind z.B. Polyphenylenether, die an mindestens 2 der Phenylringe Hydroxygruppen tragen, sowie allgemein Verbindungen (Oligomere), in denen aromatische Ringe durch eine Einfachbindung, -O-, -CO-, -SO₂usw. miteinander verbunden sind und mindestens (und vorzugsweise) zwei Hydroxygruppen an aromatische Gruppen gebunden aufweisen.

Besonders bevorzugte aromatische Polyole sind aromatische Diole. Unter diesen aromatischen Diolen sind besonders bevorzugt Verbindungen mit den allgemeinen Formeln (II) und (III): 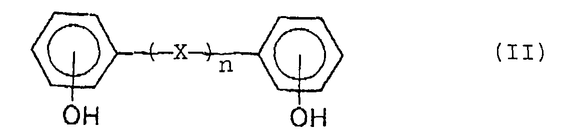 worin X für einen (C_{**1**}-C_{**8**})-Alkylen- oder Alkyliden-Rest, einen (C_{**6**}-C_{**14**})-Arylenrest, -O-, -S-, -CO- oder -SO₂- steht und n 0 oder 1 ist;

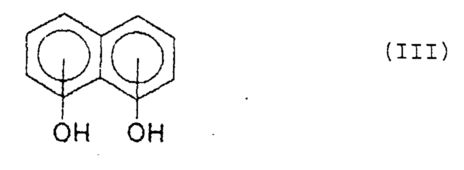

Bevorzugte Bedeutungen für X in Formel (II) sind C₁-C₄-Alkylen oder -Alkyliden, insbesondere -C(CH₃)₂- und -SO₂-. In den Verbindungen der Formeln (II) und (III) können die aromatischen Ringe neben den OH-Gruppen noch bis zu 4 bzw. 3 weitere Substituenten, wie z.B. Halogen, Alkyl und Alkoxy, tragen.

Konkrete Beispiele für Verbindungen der Formel (II) und (III) sind Bisphenol A, Bisphenol S und 1,5-Dihydroxynaphthalin. Unter diesen wird Bisphenol A besonders bevorzugt.

In den Zusammensetzungen für korrosionsinhibierende Beschichtungen wird das Polyol (Diol) in der Regel in solchen Mengen eingesetzt, daß pro Mol Epoxidring aus der Siliciumverbindung A 0,2 bis 1,5 Mol Hydroxylgruppen aus dem aromatischen Polyol D anwesend sind. Vorzugsweise sind pro Mol Epoxidring 0,3 bis 1,2, besonders bevorzugt 0,6 bis 1 Mol Hydroxylgruppen aus dem Polyol D vorhanden, wobei der optimale Wert bei 0,8 Mol OH pro Mol Epoxy liegt.

Werden statt aromatischen Diolen aromatische Polyole mit mehr als zwei OH-Gruppen eingesetzt, werden die entsprechenden Materialien spröder, dafür aber auch härter. Schließlich soll noch erwähnt werden, daß ein Teil bzw. die gesamten aromatischen Polyole durch aliphatische Polyole ersetzt werden können, die einen vergleichbaren pKₛ-Wert aufweisen, obgleich dies nicht bevorzugt wird.

Zu erwähnen wäre auch noch, daß sich der Brechungsindex der entsprechenden korrosionsinhibierenden Beschichtungen nicht nur durch die Konzentration und Art der teilchenförmigen Materialien B (falls diese überhaupt eingesetzt werden), sondern auch über die Auswahl des entsprechenden aromatischen Polyols steuern läßt. So weist z.B. eine Beschichtung unter Verwendung von Bisphenol S einen höheren Brechungsindex als eine Beschichtung auf der Basis von Bisphenol A auf.

Wie oben erwähnt, können auch bei der Herstellung von Zusammensetzungen für hydrophile Beschichtungen und Formkörper aromatische Polyole D in kleinen Mengen verwendet werden, um die Kondenswasserbeständigkeit der entsprechenden Materialien zu verbessern. Die Obergrenze für die Konzentration der Komponente D liegt hierbei bei etwa 10 Mol-%, bezogen auf die Epoxygruppen der eingesetzten Siliciumverbindung(en) A. Werden größere Mengen eingesetzt, nimmt die Diffusionsfähigkeit der Tenside ab, was zu einer Verminderung bzw. einem Verlust der Antibeschlageigenschaften führen kann.

### Lewis-Base E

Bei der Lewis-Base E, die insbesondere in den Zusammensetzungen für hydrophile und korrosionsinhibierende Materialien eingesetzt wird, handelt es sich vorzugsweise um eine Stickstoffverbindung. Derartige Stickstoffverbindungen können z.B. ausgewählt werden aus N-Heterocyclen, Aminogruppen-haltigen Phenolen, polycyclischen Aminen und Ammoniak (vorzugsweise als wäßrige Lösung). Konkrete Beispiele hierfür sind 1-Methylimidazol, 2-(N,N-Dimethylaminomethyl)phenol, 2,4,6-Tris(N,N-dimethylaminomethyl) phenol und 1,8-Diazabicyclo[5.4.0]-7-undecen. Besonders bevorzugt unter diesen Verbindungen wird 1-Methylimidazol.

Eine weitere Klasse von stickstoffhaltigen Lewis-Basen, die erfindungsgemäß eingesetzt werden können, sind hydrolysierbare Silane, die über mindestens einen nicht-hydrolysierbaren Rest verfügen, der mindestens eine primäre, sekundäre oder tertiäre Aminogruppe umfaßt. Derartige Silane können zusammen mit der Siliciumverbindung A hydrolysiert werden und stellen dann eine in das organisch modifizierte anorganische Netzwerk eingebaute Lewis-Base dar. Bevorzugte Stickstoff-haltige Siliciumverbindungen sind solche der allgemeinen Formel (IV):

R₃SiR" (IV)

worin die Reste R wie im Falle der allgemeinen Formel (I) oben definiert sind, und R" für einen nicht-hydrolysierbaren, an Si gebundenen Rest steht, der mindestens eine primäre, sekundäre oder tertiäre Aminogruppe umfaßt. Konkrete Beispiele für derartige Silane sind 3-Aminopropyltrimethoxysilan, 3-Aminopropyltriethoxysilan, N-(2-Aminoethyl)-3-aminopropyltrimethoxyysilan, N-[N'-(2'-Aminoethyl)-2-aminoethyl]3-aminopropyltrimethoxysilan und N-[3-(Triethoxysilyl)propyl]-4,5-dihydroimidazol.

Die Lewis-Base wird in den entsprechenden Zusammensetzungen im allgemeinen in einer Menge von 0,01 bis 0,5 Mol pro Mol Epoxygruppe der Siliciumverbindung A eingesetzt. Bevorzugt sind Mengen im Bereich von 0,02 bis 0,3 und insbesondere 0,05 bis 0,1 Mol Lewis-Base pro Mol Epoxygruppe.

Wie bereits oben erwähnt, kann in den Zusammensetzungen für hydrophile Materialien auf den Einsatz eines (nicht-ionischen) Tensids verzichtet werden, wenn dafür eine Lewis-Base verwendet wird. Allerdings hat dies den Nachteil, daß dadurch in der Regel die Langzeit-Antibeschlageigenschaften der entsprechenden Beschichtungen verlorengehen und wird deshalb nicht bevorzugt.

### Alkoholat F

Das einsetzbare Alkoholat F von Ti, Zr ist vorzugsweise ein solches der allgemeinen Formel (V)

M(OR" ')ₘ (V)

worin M für Ti, Zr steht, R''' eine Alkylgruppe mit vorzugsweise 1 bis 4 Kohlenstoffatomen (z.B. Methyl, Ethyl, Propyl, Isopropyl oder Butyl) darstellt und m 4 (M = Ti, Zr) ist.

Für die Mengen an einsetzbarem Alkoholat F gilt dasselbe wie im Falle der Lewis-Base E.

### Fluorhaltige Siliciumverbindung G

Die in den Zusammensetzungen für hochkratzfeste und korrosionsinhibierende Beschichtungen zusätzlich einsetzbaren hydrolysierbaren fluorierten Silane G sind solche, die über mindestens einen nicht-hydrolysierbaren Rest verfügen, der 5 bis 30 Fluoratome an Kohlenstoffatome gebunden aufweist, die durch mindestens zwei Atome von Si getrennt sind. Derartige Silane werden in der DE-OS 41 18 184 detailliert beschrieben. Konkrete Beispiele hierfür sind die folgenden:

C₂F₅CH₂-CH₂-SiY₃

n-C₆F_{**13**}CH₂CH₂-SiY₃

n-C₈F_{**17**}CH₂CH₂-SiY₃

n-C_{**10**}F_{**21**}CH₂CH₂-SiY₃

(Y = OCH₃, OC₂H₅ oder Cl)

i-C₃F₇O-(CH₂)₃-SiCl₂(CH₃)

n-C₆F_{**13**}CH₂CH₂SiCl₂(CH₃)

n-C₆F_{**13**}CH₂CH₂SiCl(CH₃)₂

Diese fluorierten Silane werden im allgemeinen in einer Menge von 0,1 bis 15, vorzugsweise 0,2 bis 10 und besonders bevorzugt 0,5 bis 5 Gew.-%, bezogen auf den Feststoffgehalt der organisch modifizierten anorganischen Matrix, eingesetzt.

### Zusätzlich zur Siliciumverbindung A einsetzbare hydrolysierbare Verbindungen H:

Neben den Siliciumverbindungen A können zur Herstellung der erfindungsgemäßen Zusammensetzungen auch andere hydrolysierbare Verbindungen von Elementen aus der Gruppe Si, Ti, Zr, Al, B, Sn und V herangezogen und vorzugsweise mit der bzw. den Siliciumverbindung(en) hydrolysiert werden. Die Menge derartiger zusätzlicher Verbindungen H sollte jedoch 70 Mol-% und insbesondere 50 Mol-% aller eingesetzten hydrolysierbaren Verbindungen nicht überschreiten, wobei besonders bevorzugt nicht mehr als 30 und insbesondere nicht mehr als 10 Mol-% aller eingesetzten hydrolysierbaren Verbindungen von der bzw. den Siliciumverbindung(en) A verschieden sind.

Konkrete Beispiele für Verbindungen H, die eingesetzt werden können, sind im folgenden angegebenen, wobei diese jedoch keine Beschränkung der einsetzbaren Verbindungen H darstellen sollen.

Si(OCH₃)₄, Si(OC₂H₅)₄, Si(O-n- oder i-C₃H₇)₄
Si(OC₄H₉)₄, SiCl₄, HSiCl₃, Si(OOCCH₃)4
CH₃-SiCl₃, CH₃-Si(OC₂H₅)₃, C₂H₅-SiCl₃, C₂H₅-Si(OC₂H₅)₃,
C₃H₇-Si(OCH₃)₃, C₆H₅-Si(OCH₃)₃, C₆H₅-Si(OC₂H₅)₃,
(CH₃O)₃-Si-C₃H₆-Cl,
(CH₃)₂SiCl₂, (CH₃)₂Si(OCH₃)₂, (CH₃)₂Si(OC₂H₅)₂,
(CH₃)₂Si(OH)₂, (C₆H₅)₂SiCl₂, (C₆H₅)₂Si(OCH₃)₂,
(C₆H₅)₂Si(OC₂H₅)₂, (i-C₃H₇)₃SiOH,
CH₂=CH-Si(OOCCH₃)₃
CH₂=CH-SiCl₃, CH₂=CH-Si(OCH₃)₃, CH₂=CH-Si(OC₂H₅)₃,
CH₂=CH-Si(OC₂H₄OCH₃)₃, CH₂=CH-CH₂-Si(OCH₃)₃,
CH₂=CH-CH₂-Si(OC₂H₅)₃,
CH₂=CH-CH₂-Si(OOCCH₃)₃,
CH₂=C(CH₃)-COO-C₃H₇-Si(OCH₃)₃,
CH₂=C(CH₃)-COO-C₃H₇-Si(OC₂H₅)₃,
Al(OCH₃)₃, Al(OC₂H₅)₃, Al(O-n-C₃H₇)₃,
Al(O-i-C₃H₇)₃, Al(OC₄H₉)₃, Al(O-i-C₄H₉)₃,

Al(O-sek-C₄H₉)₃, AlCl₃, AlCl(OH)₂, Al(OC₂H₄OC₄H₉)₃,
TiCl₄, Ti(OC₂H₅)₄, Ti(OC₃H₇)₄,
Ti(O-i-C₃H₇)₄, Ti(OC₄H₉)₄, Ti(2-ethylhexoxy)₄;
ZrCl₄, Zr(OC₂H₅)₄, Zr(OC₃H₇)₄, Zr(O-i-C₃H₇)₄, Zr(OC₄H₉)4, ZrOCl₂, Zr(2-ethylhexoxy)₄, sowie Zr-Verbindungen, die komplexierende Reste aufweisen, wie z.B. β-Diketon-und Methacryl-Reste,
BCl₃, B(OCH₃)₃, B(OC₂H₅)₃, SnCl₄, Sn(OCH₃)₄,
Sn(OC₂H₅)₄, VOCl₃, VO(OCH₃)₃.

Wie ersichtlich, können diese Verbindungen H (insbesondere die Siliciumverbindungen) auch über nicht-hydrolysierbare Reste verfügen, die eine C-C-Doppel- oder Dreifach-Bindung aufweisen. Werden derartige Verbindungen zusammen mit den Siliciumverbindungen A eingesetzt, können in die Zusammensetzung zusätzlich auch (vorzugsweise Epoxy- oder Hydroxylgruppen-haltige) Monomere, wie z.B. Meth(acrylate), einverleibt werden (selbstverständlich können diese Monomeren auch über zwei oder mehr funktionelle Gruppen desselben Typs verfügen, wie z.B. Poly(meth)acrylate von organischen Polyolen; ebenso ist die Verwendung von organischen Polyepoxiden möglich). Bei der thermischen oder photochemisch induzierten Härtung der entsprechenden Zusammensetzung findet dann zusätzlich zum Aufbau der organisch modifizierten anorganischen Matrix eine Polymerisation der organischen Spezies statt, wodurch die Vernetzungsdichte und somit auch die Härte der entsprechenden Überzüge und Formkörper zunimmt.

Am Rande soll auch erwähnt werden, daß die Verwendung von Siliciumverbindungen (A), die über mindestens zwei Epoxidgruppen verfügen, in den erfindungsgemäßen Zusammensetzungen zu Beschichtungen und Formkörpern mit verbesserter Kondenswasserstabilität führt.

Die Herstellung der erfindungsgemäßen Zusammensetzung erfolgt auf diesem Gebiet übliche Art und Weise. Vorzugsweise wird zunächst die hydrolysierbare Siliciumverbindung A vorzugsweise unter Verwendung eines sauren Katalysators (beim Raumtemperatur) hydrolysiert, wobei, wie oben erwähnt, vorzugsweise etwa ½ Mol H₂O pro Mol hydrolysierbare Gruppe eingesetzt wird. Daran schließt sich dann die Zugabe der anderen Komponenten in beliebiger Reihenfolge an. Die Hydrolyse kann aber z.B. auch in Gegenwart von Böhmit erfolgen.

Werden neben den relativ reaktionsträgen Siliciumverbindungen auch reaktionsfähigere Verbindungen H eingesetzt, wie z.B. solche von Ti, Zr und Al, empfiehlt es sich, das Wasser schrittweise und/oder unter Eiskühlung zuzugeben und/oder Verbindungen einzusetzen, die aufgrund von Komplexierung reaktionsträger gemacht wurden (wie z.B. im Falle von Al(OCH₂CH₂OC₄H₉)₃).

Zwecks Einstellung der rheologischen Eigenschaften der Zusammensetzungen können diesen gegebenenfalls inerte Lösungsmittel, vorzugsweise einen C₁-C₈-Alkohol, auf irgendeiner Stufe der Herstellung zugesetzt werden (vorzugsweise handelt es sich bei diesen Lösungsmitteln um bei Raumtemperatur flüssige Alkohole, die im übrigen auch bei der Hydrolyse der bevorzugt eingesetzten Alkoxide der betreffenden Elemente entstehen), wobei diese Alkohole auch Ethergruppen enthalten können.

Weiter können in die erfindungsgemäßen Zusammensetzungen die üblichen Additive einverleibt werden, wie z.B. Färbemittel, Verlaufsmittel, UV-Stabilisatoren, Photoinitiatoren, Photosensibilisatoren (wenn eine photochemische Härtung der Zusammensetzung beabsichtigt ist) und thermische Polymerisationskatalysatoren. Im Falle von Beschichtungszusammensetzungen kann die Auftragung auf das Substrat durch Standard-Beschichtungsverfahren, wie z.B. Tauchen, Streichen, Bürsten, Rakeln, Walzen, Sprayen und Schleudern, erfolgen.

Gegegenenfalls nach vorheriger Antrocknung bei Raumtemperatur (zur teilweisen Entfernung des Lösungsmittels) wird dann eine Härtung (Kondensation) durchgeführt. Vorzugsweise erfolgt die Härtung thermisch bei Temperaturen im Bereich von 50 bis 300°C, insbesondere 70 bis 200°C und besonders bevorzugt 90 bis 130°C, gegebenenfalls unter vermindertem Druck. Im Falle der Einverleibung von ungesättigten Verbindungen und Photoinitiatoren kann jedoch auch eine Härtung durch Bestrahlung erfolgen, an die sich gegebenenfalls eine thermische Nachhärtung anschließt.

Die erfindungsgemäßen Zusammensetzungen eignen sich insbesondere als Beschichtungszusammensetzungen, wobei übliche Schichtdicken z.B. 1 bis 30, insbesondere 3 bis 15 µm, betragen.

Die entsprechenden Beschichtungen zeichnen sich neben einer hohen Transparenz insbesondere durch eine hohe Kratzfestigkeit, ein Langzeit-hydrophiles Verhalten (bedingt durch die sauer katalysierte Hydrolyse), das durch die Verwendung von (nicht-ionischen) Tensiden (die auch ausgezeichnete Antibeschlageigenschaften liefern) noch verstärkt werden kann, schmutzabweisende Eigenschaften (bei zusätzlicher Verwendung von fluorierten Silanen) bzw. durch ausgezeichnete korrosionsinhibierende Eigenschaften (bei Verwendung von aromatischen Polyolen D) aus. Dementsprechend eignen sie sich insbesondere für die Beschichtung von transparenten Materialien wie (Brillen-)Glas und transparenten Kunststoffen (z.B. Polycarbonat, Polymethylmethacrylat, Polystyrol, Polyethylenterephthalat und ABS-Harz) bzw. zusätzlich für die Beschichtung von Metallen oder metallisierten Oberflächen. Hierbei wären insbesondere zu nennen Aluminium, Silber, Messing, Magnesium, Eisen und verzinkte Oberflächen, insbesondere Aluminium und Magnesium. In diesem Zusammenhang sei auch noch erwähnt, daß die erfindungsgemäßen korrosionsinhibierenden Zusammensetzungen selbst auf Oberflächen, die lediglich mit alkalischen Tensiden (z.B. Almeco^{**R**}, Firma Henkel) gereinigt wurden, die beschriebenen ausgezeichneten Eigenschaften zeigen. Dies ist ein wesentlicher Vorteil gegenüber den geläufigen korrosionsinhibierenden Schichten, für die in aller Regel umweltrelevante Beiz- bzw. Chromatierverfahren notwendig sind.

Die folgenden Beispiele sollen die vorliegende Erfindung weiter erläutern, ohne deren Umfang jedoch zu beschränken.

### I. Synthese von hochkratzfesten Beschichtungsmaterialien

### BEISPIEL I.

### a) Herstellung des Böhmitsols:

12,82 g Essigsäure-stabilisiertes (6,4 Gew.-% Essigsäure) Böhmitpulver wurden mit 104,62 g 0,1n HCl versetzt. Durch anschließende Ultraschall-Behandlung (20 Minuten) entstand eine transparente, farblöse Lösung, die direkt zur Herstellung des Beschichtungssols weiterverwendet wurde.

### b) Herstellung des Beschichtungssols:

Eine Mischung auf 118,17 g GPTS und 62,50 g TEOS wurde mit 24,3 g des obigen Böhmitsols versetzt. Die Reaktionsmischung wurde 2 Stunden bei Raumtemperatur gerührt und anschließend unter Eiskühlung mit 18,93 g Aluminiumtributoxyethanolat versetzt. Das resultierende klare Sol wurde 2 Stunden bei Raumtemperatur gerührt und dann unter Eiskühlung mit 93,14 g des obigen Böhmitsols und 79,30 g Butoxyethanol versetzt. Die Topfzeit betrug mehrere Monate bei Lagerung bei 4°C. Das transparente Beschichtungssol wurde durch Standard-Beschichtungsverfahren, z.B. Schlunder - oder Tauchbeschichtung, auf die Substrate aufgebracht und bei 90°C 4 Stunden thermisch gehärtet. Die so hergestellten Beschichtungen auf transparenten Kunststoffen wiesen gute optische Qualität und Haftung sowie eine sehr hohe mechanische Verschleißbeständigkeit (Ritzhärten 100 bis > 120 g) auf.

## Patentansprüche

1. Verfahren zur Herstellung einer Zusammensetzung für hochkratzfeste Beschichtungen und Formkörper auf der Basis von hydrolysierbaren Silanen mit Epoxidgruppen, umfassend die Stufe der Vereinigung von
(a) Böhmit-Teilchen mit einer Teilchengröße im Bereich von 1 bis 100 nm und
(b) einer aus Aluminiumtributoxyethanolat und Alkoholaten von Ti und Zr ausgewählten Verbindung
mit mindestens einer vorhydrolysierten oder in Gegenwart der Teilchen (a) hydrolysierten Siliciumverbindung A mit mindestens einem hydrolytisch nicht abspaltbaren, direkt an Si gebundenen Rest, der über einen Epoxidring verfügt.

2. Verfahren nach Anspruch 1 zur Herstellung einer Zusammensetzung für Langzeit-hydrophile Beschichtungen und Formkörper, **dadurch gekennzeichnet, daß** es umfaßt die Zugabe mindestens eines nicht-ionischen Tensids C zur vorhydrolysierten Siliciumverbindung A.

3. Verfahren nach Anspruch 1 oder 2 zur Herstellung einer Zusammensetzung für korrosionsinhibierende Beschichtungen, **dadurch gekennzeichnet, daß** es umfaßt die Zugabe mindestens eines aromatischen Polyols D mit einem durchschnittlichen Molekulargewicht von nicht mehr als 1000 zur vorhydrolysierten Siliciumverbindung A.

4. Verfahren nach irgendeinem der Ansprüche 2 und 3, **dadurch gekennzeichnet, daß** zusätzlich mindestens eine hydrolysierbare Siliciumverbindung G, die über mindestens einen nicht hydrolysierbaren Rest verfügt, der 5 bis 30 Fluoratome an Kohlenstoffatomen aufweist, die durch mindestens 2 Atome von Si getrent sind, eingesetzt wird.

5. Verfahren nach irgendeinem der Ansprüche 1 bis 4, **dadurch gekennzeichnet, daß** die Siliciumverbindung(en) A ausgewählt wird (werden) aus Verbindungen der allgemeinen Formel (I):
R₃SiR' (I)
in welcher die Reste R, gleich oder verschieden voneinander, für eine hydrolysierbare Gruppe stehen und R' einen Glycidyloxy-(C₁-C₆)-alkylen-Rest darstellt.

6. Verfahren nach irgendeinem der Ansprüche 1 bis 5, **dadurch gekennzeichnet, daß** die Siliciumverbindung(en) A unter Verwendung eines sauren Katalysators hydrolysiert wird (werden).

7. Verfahren nach irgendeinem der Ansprüche 1 bis 6, **dadurch gekennzeichnet, daß** die Siliciumverbindung(en) A zusammen mit einer oder mehreren anderen hydrolysierbaren Verbindungen H, ausgewählt aus Alkoxiden, von Elementen aus der Gruppe Si, Ti, Zr, Al, B, Sn und V hydrolysiert wird (werden), wobei die Menge der Verbindungen H 70 Mol-%, bezogen auf die insgesamt eingesetzten hydrolysierbaren Verbindungen, nicht übersteigt.

8. Verfahren nach irgendeinem der Ansprüche 1 bis 7, **dadurch gekennzeichnet, daß** die Böhmit-Teilchen in Form eines Sols zugegeben werden.

9. Verfahren nach irgendeinem der Ansprüche 2 bis 8, **dadurch gekennzeichnet, daß** das nicht-ionische Tensid C ausgewählt wird aus solchen, die bei Raumtemperatur in flüssiger Form vorliegen.

10. Verfahren nach irgendeinem der Ansprüche 3 bis 9, **dadurch gekennzeichnet, daß** das aromatische Polyol D ausgewählt wird aus Diolen mit den allgemeinen Formeln (II) and (III): 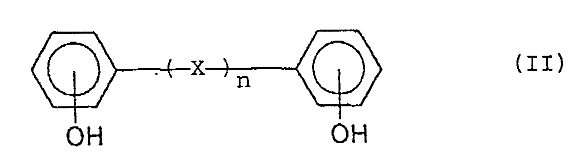 worin X für einen (C₁-C₈)-Alkylen- oder Alkyliden-Rest, einen (C₆-C₁₄)-Arylenrest, -O-, -S-, -CO- oder -SO₂- steht und n 0 oder 1 ist;

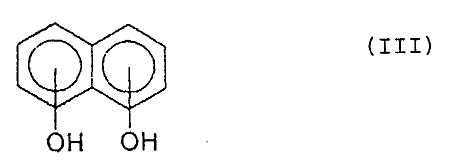

11. Zusammensetzungen auf der Basis von hydrolysierbaren Silanen mit Epoxidgruppen, erhältlich nach irgendeinem der Verfahren der Ansprüche 1 bis 10.

12. Verwendung der nach den Verfahren gemäß irgendeinem der Ansprüche 1 bis 10 erhältlichen Zusammensetzungen zum Beschichten von Glas, Metall und Kunststoffen.

13. Verwendung der nach dem Verfahren gemäß irgendeinem der Ansprüche 1 bis 10 erhältlichen Zusammensetzungen zum Beschichten von Brillenglas und transparenten Kunststoffen.

14. Verwendung der nach den Verfahren gemäß irgendeinem der Ansprüche 1 bis 10 erhältlichen Zusammensetzungen zum Beschichten von Al, Mg und Polycarbonaten.

15. Verwendung nach irgendeinem der Ansprüche 12 bis 14, **dadurch gekennzeichnet, daß** man die gegebenenfalls zwecks Einstellung der rheologischen Eigenschaften einen C₁-C₈-Alkohol enthaltende Zusammensetzung auf die Substratoberfläche aufträgt and (a) vorzugsweise bei Temperaturen von 90 bis 130°C thermisch härtet oder (b) nach vorheriger Zugabe eines Photoinitiators photochemisch aushärtet und gegebenenfalls thermisch nachhärtet.

## Claims

1. Process for the production of a composition for highly scratch-resistant coatings and molded articles based on hydrolyzable silanes having epoxy groups, comprising the step of combining
(a) boehmite particles having a particle size ranging from 1 to 100 nm; and
(b) a compound selected from aluminium tributoxyethanolate and alcoholates of Ti and Zr
in the presence of a silicon compound A having at least one radical bonded directly to Si and not being removable hydrolytically and including an epoxide ring which compound has been prehydrolyzed or hydrolysed in the presence of the particles (a).

2. Process according to claim 1 for the production of a composition for long-term hydrophilic coatings and molded articles, **characterized in that** it comprises the addition of at least one non-ionic surfactant C to said prehydrolyzed silicon compound A.

3. Process according to claim 1 or 2 for the production of a composition for corrosion-inhibiting coatings, **characterized in that** it comprises the addition of at least one aromatic polyol D having an average molecular weight not exceeding 1000 to said prehydrolyzed silicon compound A.

4. Process according to any one of claims 2 and 3, **characterized in that** additionally, at least one hydrolysable silicon compound G having at least one non-hydrolyzable radical which contains 5 to 30 fluorine atoms bonded to carbon atoms separated from Si by at least 2 atoms is employed.

5. Process according to any one of claims 1 to 4, **characterized in that** the silicon compound(s) A is (are) selected from compounds of the general formula (I):
R₃ SiR' (I)
wherein the radicals R, the same or different from each other, represent a hydrolyzable group, and R' is a glycidyloxy-(C₁ -C₆)-alkylene radical.

6. Process according to any one of claims 1 to 5, **characterized in that** said silicon compound(s) A is (are) hydrolyzed by using an acidic catalyst.

7. Process according to any one of claims 1 to 6, **characterized in that** said silicon compound(s) A is (are) hydrolyzed together with one or more other hydrolyzable compounds H, preferably alkoxides, of elements from the group consisting of Si, Ti, Zr, Al, B, Sn and V, the amount of compounds H not exceeding 70 mole% based on the total of hydrolyzable compounds employed.

8. Process according to any one of claims 1 to 7, **characterized in that** the boehmite particles are added in the form of a sol.

9. Process according to any one of claims 2 to 8, **characterized in that** said non-ionic surfactant C is selected from those which are in liquid form at room temperature.

10. Process according to any one of claims 3 to 9, **characterized in that** said aromatic polyol D is selected from diols having the general formulae (II) and (III): 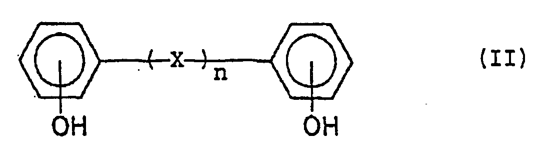 wherein x represents a (C₁-C₈) alkylene or alkylidene radical, a (C₆-C₁₄) arylene radical, -0-, -S-, -CO- or -SO₂⁻, and n is 0 or 1;

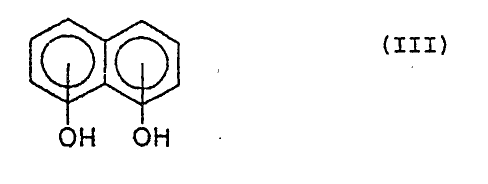

11. Compositions based on hydrolyzable silanes having epoxy groups, obtainable by the process of any one of claims 1 to 10.

12. Use of the compositions obtainable by the process according to any one of claims 1 to 10 for the coating of glass, metal or plastics.

13. Use of the compositions obtainable by the process according to any one of claims 1 to 10 for the coating of lenses and transparent plastics.

14. Use of the compositions obtainable by the process according to any one of claims 1 to 10 for the coating of Al, Mg and polycarbonates.

15. Use according to any one of claims 12 to 14, **characterized in that** the composition which optionally contains a C₁-C₈ alcohol for adjusting the rheological properties is applied onto the surface of the substrate, and (a) is cured thermally, preferably at temperatures of from 90 to 130°C, or (b) is cured photochemically following the addition of a photoinitiator, and is optionally post-cured thermally.

## Revendications

1. Procédé de préparation d'une composition pour revêtement et pièces moulées à très haute résistance aux rayures, à base de silanes hydrolysables portant des groupes époxyde, comprenant une étape qui consiste à mélanger
(a) des particules de boehmite ayant une taille comprise dans l'intervalle allant de 1 à 100 nm, et
(b) un composé choisi parmi le tributoxyéthanolate d'aluminium et les alcoolates de Ti et Zr,
avec au moins un composé de silicium A préhydrolysé ou hydrolysé en présence des particules (a), portant au moins un résidu non hydrolysable lié directement à l'atome de silicium, qui porte un cycle époxy.

2. Procédé selon la revendication 1 pour la préparation d'une composition pour des revêtements et des pièces moulées hydrophiles longue durée, **caractérisé par le fait qu'**il comprend l'addition d'au moins un agent tensioactif non ionique C au composé de silicium A préhydrolysé.

3. Procédé selon la revendication 1 ou 2, pour la préparation d'une composition pour revêtements anti-corrosion, **caractérisé par le fait qu'**il comprend l'addition, au composé de silicium A préhydrolysé, d'au moins un polyol aromatique D ayant une masse moléculaire moyenne au plus égale à 1000.

4. Procédé selon Tune quelconque des revendications 2 et 3, **caractérisé par le fait que** l'on utilise en plus au moins un composé de silicium hydrolysable G portant au moins un résidu non hydrolysable comportant de 5 à 30 atomes de fluor liés à des atomes de carbone et séparés de l'atome de silicium par au moins deux atomes.

5. Procédé selon Tune quelconque des revendications 1 à 4, **caractérisé par le fait que** le ou les composé(s) de silicium A sont choisis parmi les composés de formule générale (I):
(I) R₃SiR'
dans laquelle les résidus R, identiques ou différents, représentent un groupe hydrolysable et R' représente un résidu glycidyloxy-(alkylène en C₁₋₆).

6. Procédé selon Tune quelconque des revendications 1 à 5, **caractérisé par le fait que** le ou les composé(s) de silicium A sont hydrolysés en présence d'un catalyseur acide.

7. Procédé selon Tune quelconque des revendications 1 à 6, **caractérisé par le fait que** le ou les composé(s) de silicium A sont hydrolysés en présence d'un ou de plusieurs autres composés hydrolysables H choisis parmi les alcoolates d'éléments choisis parmi Si, Ti, Zr, Al, B, Sn et V, la quantité de composés H n'excédant pas 70 % en moles, rapporté à la quantité totale de composés hydrolysables utilisée.

8. Procédé selon Tune quelconque des revendications 1 à 7, **caractérisé par le fait que** les particules de boehmite sont ajoutées sous forme d'un sol.

9. Procédé selon Tune quelconque des revendications 2 à 8, **caractérisé par le fait que** l'agent tensioactif non ionique C est choisi parmi ceux qui sont liquides à température ambiante.

10. Procédé selon Tune quelconque des revendications 3 à 9, **caractérisé par le fait que** le polyol aromatique D est choisi parmi les diols de formule générale (II) et (III): 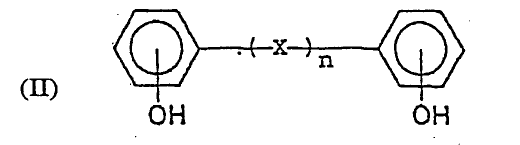 dans laquelle X représente un résidu alkylène en C₁₋₈ ou alkylidène en C₁₋₈, un résidu arylène en C₆₋₁₄, un groupe -O-, -S-; -CO- ou -SO₂- et n vaut 0 ou 1 :

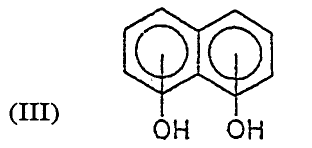

11. Composition à base de silanes hydrolysables comportant des groupes époxyde, que l'on peut obtenir par un procédé selon l'une quelconque des revendications 1 à 10.

12. Utilisation de la composition que l'on peut obtenir par un procédé selon Tune quelconque des revendications 1 à 10 pour le revêtement de matériaux en verre, en métal ou en matières plastiques.

13. Utilisation des compositions que l'on peut obtenir par un procédé selon Tune quelconque des revendications 1 à 10, pour le revêtement de verres de lunettes et de matières plastiques transparentes.

14. Utilisation des compositions que l'on peut obtenir par un procédé selon Tune quelconque des revendications 1 à 10, pour le revêtement d'Al, de Mg et de polycarbonates.

15. Utilisation selon Tune quelconque des revendications 12 à 14, **caractérisée par le fait que** l'on applique la composition, qui contient éventuellement un alcool en C₁₋₈ permettant de modifier les propriétés rhéologiques, sur la surface d'un substrat et (a) que l'on procède à un durcissement thermique, de préférence à une température comprise entre 90 et 130 °C, ou (b) que l'on procède, après addition d'un photoamorceur, à un durcissement photochimique suivi éventuellement d'un durcissement thermique.
